# EUROPEAN PATENT APPLICATION

(11) **EP 1 422 267 A1**
(43) Date of publication of application: **26.05.2004**
(21) Application number: 02025928.9
(22) Date of filing: 20.11.2002
(51) Int. Cl.: C09B 57/12, C08K 5/3447

(54) **New dyes based on 1,4,5,8-naphthalene tetracarboxylic dianhydride**

(71) Applicant: CLARIANT INTERNATIONAL LTD., 4132 Muttenz (CH)
(72) Inventor: Graciet, Jean-Christophe, F-68330 Huningue (FR)

(57) **Abstract**

The present invention relates to novel colorants, based on 1,4,5,8-naphthalene tetracarboxylic dianhydride, for the mass coloring of synthetic polar polymers, such as polyamides, polyesters, polycarbonates and ABS, with improved heat stability and light fastness.

The invention further relates to a process for preparation of said colorants and to their use in transparent plastics, in fibre applications and in toner or coating applications.

## Description

The present invention relates to novel colorants, based on 1,4,5,8-naphthalene tetracarboxylic dianhydride, for the mass coloring of polymers in particular of polar polymers such as polyamides, polyesters, polycarbonates and ABS. For the use of colorants in said polymers, stringent requirements in terms of heat stability and light fastness are expected.

The patent document DD 211 456 (VEB ChemieKombinat Bitterfeld, DDR) discloses the preparation of brown to black pigments, including the following structure :

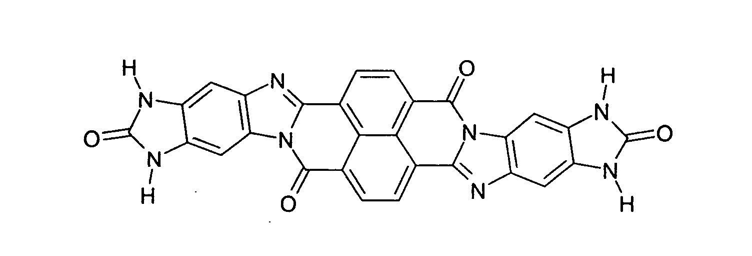

The document further explains that said pigments are intended for coloration of paints and printing inks.

The patent documents CH 561 261 and CH 561 763 (both of Sandoz AG) describe a similar preparation of related compounds represented by the following structures:

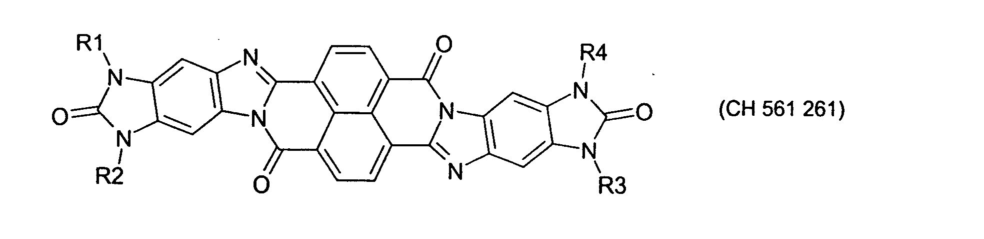

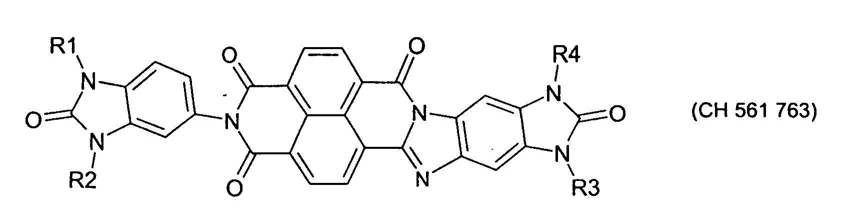

The substituents R₁ to R₄ of the benzimidazolone moiety are disclosed to be hydrogen. The compounds are described as pigments with a blue shade (compound 4 of CH 561 261) or an orange to red shade (compound 28 of CH 561 763) in PVC applications.

The compounds based on 1,4,5,8-naphthalene tetracarboxylic dianhydride known in the art are therefore pigments providing a brown to black shade, which are generally applicable in paints and printing inks and which provide a blue shade if applied in PVC.

However, pigments are generally not suitable for the mass coloring of polar polymers due to their particular character. Pigments, which are generally not compatible with the polymer matrix do not disperse to that extent that is required for transparent plastics or for fibres.

The object of the present invention is therefore to provide readily polymer-soluble colorants for coloration of synthetic polar polymers for the use in plastics and polymeric fibers, providing for high color strength, high heat stability and high light fastness properties.

Surprisingly it has been found that the compounds of the formula (I) derived from the pigment structures known in the art provide for readily polymer-soluble colorants, with red to violet shades, high color strength, high heat stability and high light fastness properties.

The invention therefore relates to compounds of the formula (I) 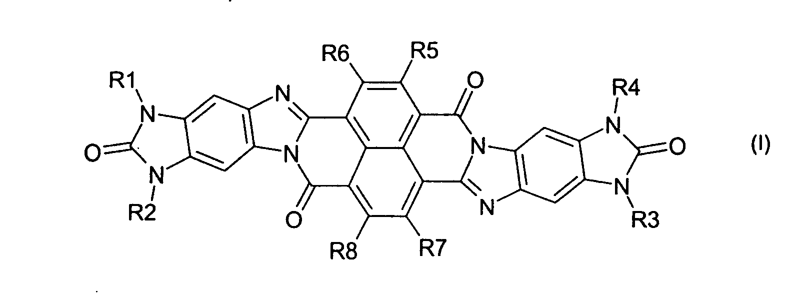 in which
- R₁ and R₃: are independently C₁₋₈alkyl, C₃₋₁₀alkenyl, phenyl, phenyl-C₁₋₄alkyl or -COR₉ where R₉ is hydrogen, C₁₋₆alkyl, phenyl, -OC₁₋₄alkyl, -C(R₁₀)=CH₂, or -NR₁₁R₁₂, where R₁₀ is hydrogen or C₁₋₄alkyl; R₁₁ is hydrogen, C₁₋₆alkyl, C₅₋₆cycloalkyl, phenyl, phenyl-C₁₋₄alkyl or C₁₋₁₂ alkylphenyl and R₁₂ is hydrogen or C₁₋₁₂alkyl;
- R₂ and R₄: are independently hydrogen, C₁₋₈alkyl, C₃₋₁₀alkenyl, phenyl, phenyl-C₁₋₄alkyl or -COR₉ where R₉ is hydrogen, C₁₋₆alkyl, phenyl, -OC₁₋₄alkyl, -C(R₁₀)=CH₂, or -NR₁₁R₁₂, where R₁₀ is hydrogen or C₁₋₄alkyl; R₁₁ is hydrogen, C₁₋₆alkyl, C₅₋₆cycloalkyl, phenyl, phenyl-C₁₋₄alkyl or C₁₋₁₂ alkylphenyl and R₁₂ is hydrogen or C₁₋₁₂alkyl;
- R₅, R₆, R₇ and R₈: are independently hydrogen, halogen, -NR₁₃R₁₄, -OR₁₄ or -SR₁₄, in which R₁₃ is C₁-C₆ alkyl, C₁-C₆ aryl, (C₆-C₁₀)aryl-(C₁-C₆) alkyl or (C₆-C₁₀)alkyl-(C₁-C₆)aryl, in which the alkyl and/or aryl radicals can be substituted by hydroxyl, C₁-C₆ alkoxy, C₁-C₆ aryloxy or halogen ; in which R₁₄ is hydrogen, C₁-C₆ alkyl, C₁-C₆ aryl, (C₆-C₁₀)aryl-(C₁-C₆)alkyl or (C₆-C₁₀)alkyl-(C₁-C₆) aryl, in which the alkyl and/or aryl radicals can be substituted by hydroxyl, C₁-C₆ alkoxy, C₁-C₆ aryloxy or halogen.

Preferred compounds of the formula (I) are those wherein R₁ and R₃ are methyl or ethyl and R₂ and R₄ are hydrogen, or wherein R₁, R₂, R₃ and R₄ are methyl or ethyl.

Further preferred compounds of the formula (I) are those in which R₅, R₆, R₇ and R₈ are hydrogen. Preference is also given to compounds of formula (I) in which R₅, R₆, R₇ and R₈ are chlorine, bromine, methoxy, ethoxy, phenoxy, -NH-C₆H₄-OCH₃, -O-C₆H₄-OCH₃, or -S-C₆H₄-OCH₃,

The present invention also provides a process for preparing the compounds of the formula (I), characterised in that a tetracarboxylic acid of the formula (II) 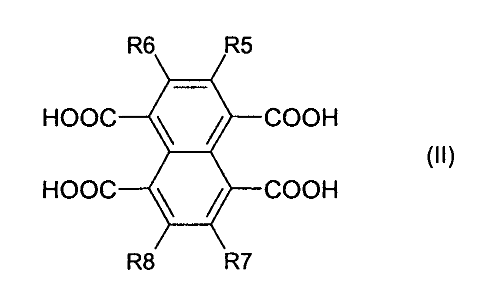 or, preferably, one of its functional derivatives, e.g. the acid dianhydride or acyl halide, wherein R₅, R₆, R₇ and R₈ are defined as above,
is condensed with a diamine of the formula (III) or the salt of a diamine of the formula (III) 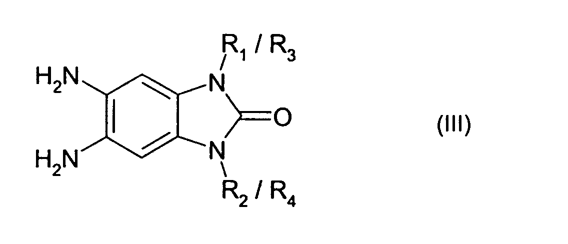 wherein R₁, R₂, R₃ and R₄ are defined as above.

Examples of suitable salts of the diamine of formula (III) are the chlorhydrate or the sulfate.

Condensation can be conducted in an inert solvent at temperatures between 25°C and 300°C, preferably between 100°C and 250°C, in the presence or absence of a catalyst, at atmospheric pressure or under pressure, preferably at atmospheric pressure.

Examples of suitable solvents are relatively high-boiling aliphatic or aromatic, substituted or unsubstituted hydrocarbons, examples being xylene, biphenyl, nitrobenzene, chlorobenzene, chloronaphthalene, glycol ethers, organic acids and acid amides, especially dimethylformamide, dimethylacetamide or N-methylpyrrolidone.

If the tetracarboxylic acid of the formula (II) is employed in the form of the free tetraacid, it is also possible to use water or a relatively high-boiling alcohols, such as ethylene glycol, as solvent.

Examples of possible catalysts are inorganic or organic acids, such as hydrochloric acid or sulphuric acid, benzenesulphonic acid, toluenesulphonic acid or acetic acid. The salts of organic acids, such as sodium or potassium acetate, are in many cases also suitable as catalysts.

The compounds of the invention are eminently suitable for the coloring of melts of synthetic polar polymers such as, for example, polyamide, polyester, polycarbonate or ABS.

Polyamides are, for examples, polycondensation products or addition polymerisation products of dicarboxylic acids and diamines, e.g. of adipic acid and hexamethylenediamine, of lactams, e.g. ε-caprolactam, or of aminocarboxylic acid, e.g. ω-aminoundecanoic acid.

The polyamide melt mixed with the pigments is brought into its final form by conventional methods - for example, in melt spinning, injection moulding, extrusion or film blowing.

Polyesters are, for examples, polycondensation products or addition polymerisation products of dicarboxylic acids and diols, e.g. of terephthalic acid and ethylenediol. The polyester melt mixed with the pigments is brought into its final form by conventional methods - for example, in melt spinning, injection moulding, extrusion or film blowing.

Polycarbonates are, for examples, polycondensation products or addition polymerisation products of phosgene and diols, e.g. of phosgene and 4,4'-isopropylidenediphenol or products of bischloroformate derivatives and diols, e.g. 4,4'-isopropylidenediphenol bischloroformate and 4,4'-isopropylidenediphenol. The polycarbonate melt mixed with the pigments is brought into its final form by conventional methods - for example, in melt spinning, injection moulding, extrusion or film blowing.

ABS polymers are, for examples, polycondensation products or addition polymerisation products of mixtures of acrylonitrile, butadiene and styrene. The ABS polymer melt mixed with the pigments is brought into its final form by conventional methods - for example, in melt spinning, injection moulding, extrusion or film blowing machines.

The novel colorants of formula (I) give a strong coloration in synthetic polar polymers such as, for examples, polyamide, polyester, polycarbonate or ABS. The novel colorants of formula (I) are extremely stable to the heat stress that is necessarily part of the coloring of synthetic polar polymers. The mass-colored substrates obtained, display excellent fastness properties, especially light-fastness. It is believed that the excellent properties are obtained due to the high polymer-solubility of the colorants.

The novel compounds of the formula (I) are also suitable as colorants in electrophotographic toners and developers, such as one- or two-component powder toners (also called one- or two-components developers), magnetic toners, liquid toners, polymerisation toners and speciality toners.

Typical toners binders are addition polymerisation, polyaddition and polycondensation resins, such as styrene, styrene-butadiene, acrylate, polyester and phenyl-epoxy resins, polysulphones, polyurethanes, individually or in combination, and also polyethylene and polypropylene, which may comprise further constituents, such as charge control agents, waxes or flow assistants, or may be modified subsequently with these additives.

The novel compounds of formula (I) are suitable, furthermore, as colorants in powders and powder coating material, especially in triboelectrically or electrokinetically sprayable powder coating materials which are used for the surface coating of articles made, for examples, from metal, wood, plastic, glass, ceramic, concrete, textile material, paper or rubber.

Powder coating resins that are typically employed are epoxy resins, carboxyl- or hydroxyl-containing polyester resins, polyurethane resins and acrylic resins, together with customary hardeners. Combinations of resins are also used. For examples, epoxy resins are frequently employed in combination with carboxyl- and hydroxyl-containing polyester resins. Typical hardener components (as a function of the resin system) are, for example, acid anhydrides, imidazoles and also dicyanodiamide and its derivatives, blocked isocyanates, bisacylurethanes, phenolic and melamine resins, triglycidyl isocyanurates, oxazolines and dicarboxylic acids.

In addition, the novel compounds of formula (I) are suitable as colorants in ink-jet inks, both aqueous and non-aqueous, and in those inks, which operate in accordance with the hot-melt process.

### Examples

In the examples below, all parts are parts by weight.

### Example 1 (compound 1)

46.7 parts of naphthalene tetracarboxylic dianhydride are suspended in 400 parts of N-methylpyrrolidone. 88 parts of 5,6-diamino-1,3-diethylbenzimidazolone and 1 part of acetic acid are added to the suspension under nitrogen atmosphere. The resulting mixture is then heated to 140°C for 8 hours. The suspension is cooled to 25°C and then filtered at this temperature. The cake is washed with 30 parts of N-methylpyrrolidone, 500 parts of methanol and 100 parts of water. The cake is dried and this gives 87.5 parts of a dark violet powder.

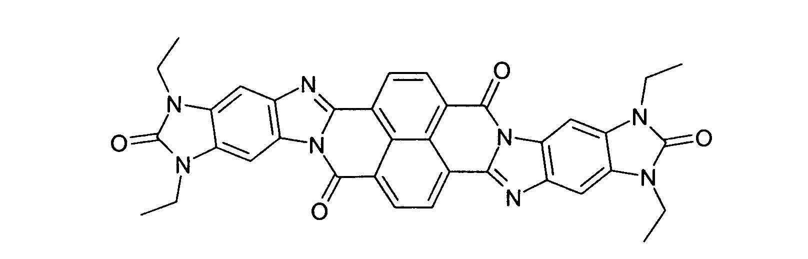

When applied in polyamide, polyester or polycarbonate, this compound gives a very strong violet transparent coloration.

### Example 2 (compound 2)

45 parts of naphthalene tetracarboxylic dianhydride are suspended in 400 parts of N-methylpyrrolidone. 78 parts of 5,6-diamino-1-ethylbenzimidazolone and 1 part of *para*toluenesulphonic acid are added to the suspension under nitrogen atmosphere. The resulting mixture is then heated to 140°C for 8 hours. The suspension is cooled to 25°C and then filtered at this temperature. The cake is washed with 30 parts of N-methylpyrrolidone, 500 parts of methanol and 100 parts of water. The cake is dried and this gives 90.8 parts of a dark violet powder.

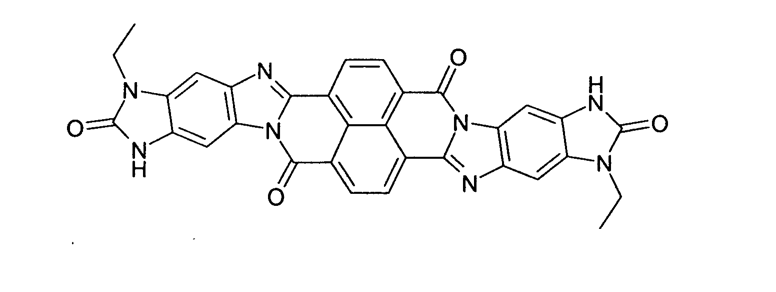

When applied in polyamide, polyester or polycarbonate, this compound gives a very strong violet transparent coloration.

### Example 3 (compound 3)

45 parts of naphthalene tetracarboxylic dianhydride are suspended in 400 parts of N-methylpyrrolidone. 65 parts of 5,6-diamino-1-methylbenzimidazolone and 1 part of paratoluenesulphonic acid are added to the suspension under nitrogen atmosphere. The resulting mixture is then heated to 140°C for 8 hours. The suspension is cooled to 25°C and then filtered at this temperature. The cake is washed with 30 parts of N-methylpyrrolidone, 500 parts of methanol and 100 parts of water. The cake is dried and this gives 91.0 parts of a dark violet powder.

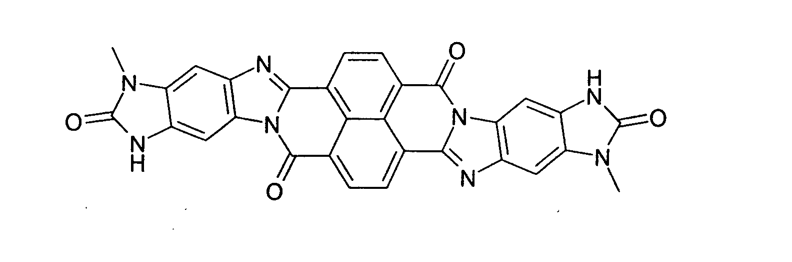

When applied in polyamide, polyester or polycarbonate, this compound gives a very strong violet transparent coloration.

### Example 4 (0.1% of compound 1 in polyamide fibres)

100 parts of polycaprolactam in the form of a powder are mixed in a drum mixer with 0.1 parts of compound 1 in powder form. After a short time, the powder is uniformly distributed and adheres to the granules. After about 10 minutes, the mixture is dried at 120°C for 16 hours, transferred to a melt spinning machine and following a residence time of about 8 minutes is spun to fibres at 275-280°C under a nitrogen atmosphere. The violet colored polyamide fibres are extremely lightfast.

All other known synthetic polyamides (e.g. Nylon®, Perlon®, etc.) can be mass-colored in the same way, as can polyesters, ABS and polycarbonates, using the compounds 1, 2 or 3.

### Example 5 (1% Compound 1 in polyamide fibres)

100 parts of polycaprolactam in the form of a powder are mixed in a drum mixer with 1.0 parts of Compound 1 in powder form. After a short time, the powder is uniformly distributed and adheres to the granules. After about 10 minutes, the mixture is dried at 120°C for 16 hours, transferred to a melt spinning machine and following a residence time of about 8 minutes is spun to fibres at 275-280°C under a nitrogen atmosphere. The strongly-violet colored polyamide fibres are extremely lightfast.

### Example 6 (0.1% Compound 1 in polyester fibres)

Polyester fibres containing 0.1 parts of compound 1 have been prepared according to the following method:

The polyester is fused and extruded through a drawing plate at constant rate by gear pump regulation. The spinning machine is heated during 2 hours at temperatures of 260°C, 262°C, 262°C, 265°C and 265°C under pressure of 80 bars. The drawing plate is heated in an oven at 350°C for at least 30 minutes. The obtained fibres are recovered on a bobbin. The obtained fibres provide a strong violet color with excellent light and weather fastness.

## Claims

1. Compound of the formula (I) 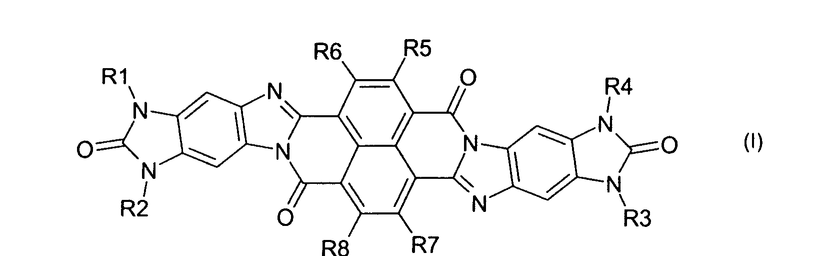 wherein
R₁ and R₃ are independently C₁₋₈alkyl, C₃₋₁₀alkenyl, phenyl, phenyl-C₁₋₄alkyl or -COR₉ where R₉ is hydrogen, C₁₋₆alkyl, phenyl, -OC₁₋₄alkyl, -C(R₁₀)=CH₂ or -NR₁₁R₁₂, where R₁₀ is hydrogen or C₁₋₄alkyl; R₁₁ is hydrogen, C₁₋₆alkyl, C₅₋₆ cycloalkyl, phenyl, phenyl-C₁₋₄ alkyl or C₁₋₁₂alkylphenyl and R₁₂ is hydrogen or C₁₋₁₂alkyl;
R₂ and R₄ are independently hydrogen, C₁₋₈alkyl, C₃₋₁₀alkenyl, phenyl, phenyl-C₁₋₄alkyl or -COR₉ where R₉ is hydrogen, C₁₋₆alkyl, phenyl, -OC₁₋₄alkyl, -C(R₁₀)=CH₂ or -NR₁₁R₁₂, where R₁₀ is hydrogen or C₁₋₄alkyl ; R₁₁ is hydrogen, C₁₋₆alkyl, C₅₋₆cycloalkyl, phenyl, phenyl-C₁₋₄alkyl or C₁₋₁₂alkylphenyl and R₁₂ is hydrogen or C₁₋₁₂alkyl;
R₅, R₆, R₇ and R₈ are independently hydrogen, halogen, -NR₁₃R₁₄, -OR₁₄ or -SR_{14,} ; in which R₁₃ is C₁-C₆ alkyl, C₁-C₆ aryl, (C₆-C₁₀)aryl-(C₁-C₆)alkyl or (C₆-C₁₀)alkyl-(C₁-C₆) aryl, in which the alkyl and/or aryl radicals can be substituted by hydroxyl, C₁-C₆ alkoxy, C₁-C₆ aryloxy or halogen ; in which R₁₄ is hydrogen, C₁-C₆ alkyl, C₁-C₆ aryl, (C₆-C₁₀)aryl-(C₁-C₆)alkyl or (C₆-C₁₀)alkyl-(C₁-C₆) aryl, in which the alkyl and/or aryl radicals can be substituted by hydroxyl, C₁-C₆ alkoxy, C₁-C₆ aryloxy or halogen.

2. Compound according to Claim 1, **characterised in that** R₁ and R₃ are methyl or ethyl and R₂ and R₄ are hydrogen, or **in that** R₁, R₂, R₃ and R₄ are methyl or ethyl.

3. Compound according to Claims 1 or 2, **characterised in that** R₅, R₆, R₇ and R₈ are hydrogen, chlorine, bromine, methoxy, ethoxy, phenoxy, -NH-C₆H₄-OCH₃, -O-C₆H₄-OCH₃, or -S-C₆H₄-OCH₃,

4. Process for preparing a compound according to one of the Claims 1 to 3, **characterised in that** a tetracarboxylic acid of the formula (II) 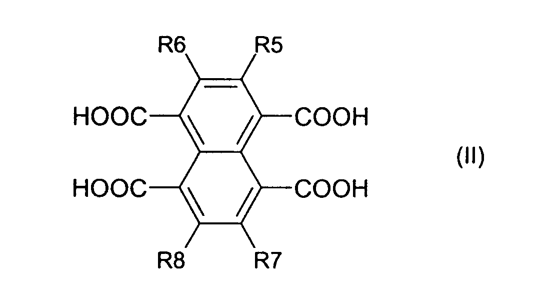 or one of its functional derivatives,
wherein R₅, R₆, R₇ and R₈ are defined as in claims I or 3,
is condensed with a diamine, or the salts of a diamine, of the formula (III) 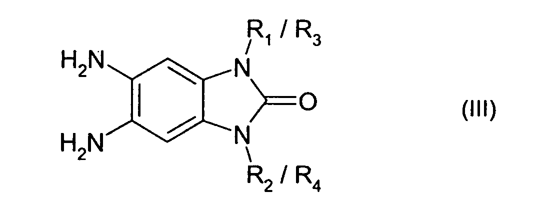 wherein R₁, R₂, R₃ and R₄ are defined as in claims I or 2.

5. Process according to Claim 4, **characterised in that** the functional derivative of the tetracarboxylic acid is the acid dianhydride or acyl chloride.

6. Use of a compound according to one of the Claim 1 to 3 for mass-coloring synthetic polar polymers selected from the group consisting of polyamides, polyesters, polycarbonates and ABS.

7. Use according to Claim 6 for mass-coloring of polycondensates of dicarboxylic acids and diamines, of lactams or of aminocarboxylic acids.

8. Use according to Claim 6 for mass-coloring of polycondensates of dicarboxylic acids and dialkohols.

9. Use of a compound according to one of the Claim 1 to 3 for coloring synthetic polar polymers for fibre applications.

10. Use of compound according to one of the Claim 1 to 3 as a colorant in electrophotographic toners and developers, in powder coating materials and in ink-jet inks.
